(19) Europäisches Patentamt
European Patent Office
Office européen des brevets

(11) **EP 1 950 739 B1**

(12) **EUROPÄISCHE PATENTSCHRIFT**

(45) Veröffentlichungstag und Bekanntmachung des Hinweises auf die Patenterteilung:
**14.09.2011 Patentblatt 2011/37**

(51) Int Cl.:
*G10L 19/00* (2006.01)    *G06K 9/00* (2006.01)
*G10L 15/20* (2006.01)

(21) Anmeldenummer: **07100973.2**

(22) Anmeldetag: **23.01.2007**

(54) **Verfahren zur Identifikation von Signalen gleichen Ursprungs**

Method for identifying signals from the same source

Procédé destiné à l'identification de signaux de même origine

(84) Benannte Vertragsstaaten:
**AT BE BG CH CY CZ DE DK EE ES FI FR GB GR HU IE IS IT LI LT LU LV MC NL PL PT RO SE SI SK TR**

(43) Veröffentlichungstag der Anmeldung:
**30.07.2008 Patentblatt 2008/31**

(73) Patentinhaber: **Siemens Aktiengesellschaft Österreich**
**1210 Wien (AT)**

(72) Erfinder: **Tschirk, Wolfgang**
**1150, Wien (AT)**

(56) Entgegenhaltungen:
**WO-A-01/65543**

**Beschreibung**

**Technisches Gebiet**

Die Erfindung betrifft ein Verfahren und eine Einrichtung zur Identifikation von Signalen gleichen Ursprungs.

**Stand der Technik**

Sprachkanäle, welche digitalisierte Sprachinformation transportieren, können auch im Fall, dass sie gleichen Ursprungs sind, deutlich unterschiedliche Bitfolgen aufweisen. Besonders in Kommunikationsnetzen ist eine eindeutige, sichere und schnelle Identifikation solcher zusammengehörigen (korrespondierenden) Sprachkanäle schwierig, da die einzelnen Netzwerkelemente eines Kommunikationsnetzes die Sprachdaten komprimieren, codieren und mit teilweiser großer und variabler Zeitverzögerung (Delay) weiterleiten. In Mobilfunknetzen besteht diese Situation in verschärfter Weise.

Das Auffinden solcher, vom gleichen Ursprung stammenden Signale ist geeignet für Anwendungen in Telekommunikationsnetzen, in welchen interne Schnittstellen über Übertragungskanäle geführt werden, deren Bandbreitenbedarf reduziert werden soll. Eine solche Anwendung ist beispielsweise in der nicht vorveröffentlichten deutschen Anmeldung mit dem Aktenzeichen "10 2006 060 002.9" vom 19.12.2006 beschrieben. Diese Anwendungen ermöglichen es, Kommunikationsnetze effizienter zu betreiben, da gegebenenfalls Kommunikationswege abgekürzt werden und dabei der zur Signalübertragung auf bestimmten Strecken von Kommunikationsnetzen erforderliche Bandbreitenbedarf reduziert werden kann.

Zur Lösung dieser Aufgabe des Identifizierens von Signalen gleichen Ursprungs stehen verschiedene mathematische Verfahren zur Verfügung. Geeignete Methoden sind sowohl die "Korrelationsanalyse" (beschrieben in Kap. 13.5, Stearns, S.D.; "Digitale Verarbeitung analoger Signale"; Oldenbourg, München&Wien 1984) als auch die "Systemanalyse" (beschrieben in Kap. 9, "Adaptive Signal Processing"; Widrow, B.; Stearns, S.D; Prentice-Hall, Englewood Cliffs, New Jersey, 1985). Beiden Methoden ist gemein, dass sie unsichere Aussagen in Fällen liefern, in denen sich zwei nicht korrespondierende Kanäle ähneln oder die Signalpegel der Kanäle niedrig sind. Zur Behebung dieses Mangels sind sowohl bei der "Korrelationsanalyse" als auch der "Systemanalyse" hohe Rechenleistungen und lange Analysezeiträume erforderlich, um eines dieser Verfahren in der Praxis einzusetzen.

Das Dokument WO 01/65543 offenbart einen Verfahren zur Vergleichung von Signalen für die objektive Bewertung der Sprachqualität in Kommunikationsnetzen.

**Darstellung der Erfindung**

Der Erfindung liegt die Aufgabe zugrunde, ein Verfahren zur Identifikation von Signalen gleichen Ursprungs anzugeben, welches die Nachteile der aus dem Stand der Technik bekannten Verfahren vermeidet.

Die Aufgabe wird durch ein Verfahren der Systemanalyse so wie im Anspruch 1 und einer Einrichtung zur Durchführung dieses Verfahrens so wie im Anspruch 4 gelöst, bei dem

- ein erstes Signal (X) an den Eingang eines digitalen Filters W herangeführt wird,

- aus dem Filterausgangssignal (WX) dieses digitalen Filters (W) und einem zweiten Signal (Y) ein Differenzsignal (D) gebildet wird,

- dieses Differenzsignal (D) dazu verwendet wird, die Übertragungsfunktion des digitalen Filters (W) so anzupassen, dass das Differenzsignal (D) ein Minimum annimmt,

- ein Dämpfungswert (R) aus den Leistungswerten des Differenzsignals (D) und des zweiten Signals (Y) gemäß

$$R = 10 \, log_{10} \frac{P(\mathbf{Y})}{P(\mathbf{D})}$$

berechnet wird,

- aus diesem Dämpfungswert (R) und dem Leistungswert des zweiten Signals (Y) gemäß

$$C(T) = \frac{\sum\limits_{t=1}^{T} P^{\alpha}(\mathbf{Y})_t \, R_t}{\sum\limits_{t=1}^{T} P^{\alpha}(\mathbf{Y})_t}$$

ein Korrespondenzkoeffizient ( C(T) ) berechnet und als Maß für die Feststellung eines gemeinsamen Ursprungs der beiden Signale (X, Y) verwendet wird.

Damit ist der Vorteil erzielbar, dass Signale, welche gleichen Ursprungs sind, schnell und sicher erkannt werden und die Wahrscheinlichkeit, zwei Signale fälschlich als zusammengehörig zu erkennen, äußerst gering ist.

Ein wesentlicher Aspekt der Erfindung ist, dass das Verfahren der Systemanalyse angewandt wird, wobei als Kriterium, ob zwei Signale gleichen Ursprungs sind, der akkumulierte Wert der mit der Leistung des ankommenden Kanals gewichteten Dämpfung, der sogenannte Korrespondenzkoeffizient, verwendet wird.

Die Methode bietet weiters den Vorteil, dass ausschließlich die in den Kanälen transportierten Signale zur Identifikation herangezogen werden, eine Modifikation, z. B. Einfügen von Erkennungssignalen, ist nicht erforderlich.

Eine vorteilhafte Ausgestaltung der Erfindung sieht vor, die Signale, welche auf den zur Identifikation anstehenden Kanälen transportiert werden, vor der Verarbeitung mittels eines Tiefpassfilters in der Bandbreite zu begrenzen und die Abtastrate des Signals zu reduzieren (Downsampling). Dadurch wird die zur Ausführung des Verfahrens erforderliche Rechenleistung deutlich gesenkt. Typischerweise erfolgt eine Bandbreitenreduktion mittels Tiefpassfilterung mit einer Grenzfrequenz von 500Hz und eine Reduktion der Abtastrate um den Faktor acht.

Eine weitere vorteilhafte Ausgestaltung der Erfindung sieht vor, das Verfahren auf die Verarbeitung von Videosignalen anzuwenden.

Das Verfahren ist nicht auf die Verarbeitung bestimmter, beispielsweise Audio- oder Videosignale eingeschränkt, sondern eignet sich für die Analyse allgemeiner Signale. Allenfalls ist die zur Ausführung des Verfahrens erforderliche Rechenleistung anzupassen.

Im Fall, dass das Verfahren in einer Anwendung in einem Mobilfunknetz, wie beispielsweise in der nicht vorveröffentlichten deutschen Anmeldung mit dem Aktenzeichen "10 2006 060 002.9" vom 19.12.2006 beschrieben, eingesetzt wird, ist es besonders vorteilhaft, die bei einem Aufbau eines Gesprächs anfallenden Signalisierungsdaten auszuwerten und gezielt nur jene Sprachkanäle zu analysieren, welche zu soeben aufgebauten Gesprächen gehören. Dadurch kann eine kontinuierliche, zyklische Analyse aller Sprachkanäle unterbleiben und somit die zur Umsetzung des Verfahrens erforderliche Rechenleistung reduziert werden.

**Kurzbeschreibung der Zeichnungen**

Es zeigen beispielhaft:

**Fig. 1** Prinzipskizze einer Einrichtung zur Erkennung von Sprachkanälen gleichen Ursprungs
**Fig. 2** Schematische Darstellung eines Systemidentifikators
**Fig. 3** Diagramm mit Messwerten des Korrespondenzkoeffizienten C(T)

**Ausführung der Erfindung**

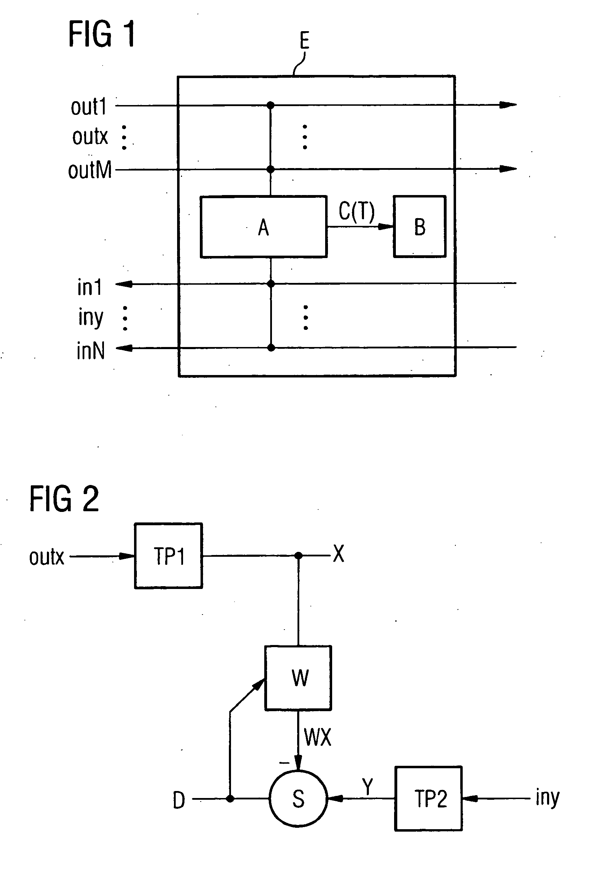

In **Fig.1** ist schematisch eine Identifikationseinrichtung E zur Umsetzung des erfindungsgemäßen Verfahrens dargestellt. Diese Identifikationseinrichtung E erfüllt die Aufgabe, zu erkennen, ob eines der ausgehenden Signale out1...outx...outM den gleichen Ursprung besitzt wie eines der ankommenden Signale in1...iny...inN. Dazu enthält diese Identifikationseinrichtung E einen Systemidentifikator A, welcher von der Identifikationseinrichtung E gesteuert, jede mögliche Kombination an out1...outx...outM und in1...iny...inN Signalen untersuchen kann und welcher einen Korrespondenzkoeffizienten C(T) errechnet, mittels welchem eine übergeordnete Bewertungseinheit B erkennen kann, ob das jeweilige Signalpaar aus ausgehenden out1...outx...outM Signalen und ankommenden in1...iny...inN Signalen den gleichen Ursprung besitzt.

Die prinzipielle Funktionsweise eines Systemidentifikators besteht darin, ein digitales Filter W so einzustellen, dass die Differenz zwischen einem tiefpassgefilterten ankommen Signal Y und einem Filterausgangssignal WX zeitlich gegen null konvergiert.

In **Fig.2** ist schematisch ein Systemidentifikator, wie in Fig. 1 enthalten, dargestellt. Dabei stellt das ausgehende Signal outx das auf dem aktuell zur Analyse anstehenden ausgehenden Kanal transportierte Signal, das ankommende Signal iny das auf dem aktuell zur Analyse anstehenden ankommenden Kanal transportierte Signal dar.

In diesem Beispiel ist eine Anwendung in der Telekommunikation dargestellt. Das ankommende Signal iny und das ausgehende Signal outx bestehen aus linear codierten Abtastwerten analoger Sprachsignale. Typischerweise werden in Telefonanwendungen Sprachsignale mit der Frequenz 8kHz abgetastet.

Das aktuell analysierte ausgehende Signal outx wird mittels des Tiefpasses TP1 in seiner Bandbreite begrenzt, dieses bandbegrenzte Signal X dient als Eingangssignal des digitalen Filters W. Das aktuell analysierte ankommende Signal iny wird mittels des Tiefpasses TP2 in seiner Bandbreite begrenzt, dieses bandbegrenzte Signal Y dient als Eingangssignal des Summierpunkts S.

Das digitale Filter W hat die Aufgabe, die Übertragungsfunktion nachzubilden, welcher das aktuell anlysierte ausgehende Signal outx in den auf die Identifikationseinrichtung E nachfolgenden Netzelementen unterworfen ist. Das digitale Filter W wendet seine Übertragungsfunktion, welche variabel ist, auf das Signal X an und bildet das Filterausgangssignal WX. Das digitale Filter W erhält das Differenzsignal D , welches aus der Differenz zwischen dem Filterausgangssignal WX und dem tiefpassgefilterten ankommenden Signal Y, die im Summierpunkt S gebildet wird, zugeführt, um damit seine Filterkoeffizienten so zu ändern, dass das Differenzsignal D ein Minimum annimmt.

Gelingt es, das digitale Filter W so einzustellen, dass das Differenzsignal D zeitlich gegen null konvergiert, so gilt das analysierte Paar aus dem ausgehenden Signal outx und dem ankommenden Signal iny als gleichen Ursprungs identifiziert (korrespondierend).

Methoden, die Koeffizienten eines digitalen Filters so einzustellen, dass das Differenzsignal D zeitlich gegen null konvergiert, sind beispielsweise in Kap. 6, "Adaptive Signal Processing"; Widrow, B.; Stearns, S.D; Prentice-Hall, Englewood Cliffs, New Jersey, 1985) beschrieben.

Im idealen Fall, in welchem es mittels des digitalen Filters W gelingt, die Übertragungsfunktion, welcher das ausgehende Signal outx in den auf die Indentifikationseinrichtung E nachfolgenden Netzelementen unterworfen ist, vollständig nachzubilden, konvergiert das Differenzsignal D zeitlich gegen null. Daher wird das logarithmierte Verhältnis der Leistungen der Signale Y und D als Kriterium herangezogen, um festzustellen, ob das aktuell analysierte ausgehende Signal outx und das aktuell analysierte ankommende Signal iny gleichen Ursprungs sind. Dieses logarithmierte Verhältnis stellt die Dämpfung R dar und berechnet sich gemäß:

$$R = 10 \, log_{10} \frac{P(\mathbf{Y})}{P(\mathbf{D})}$$

Formel 1

Die Größen P(D) und P(Y) stellen die Summe der Amplitudenquadrate über einen Zeitraum dar, welcher von der Art des zu analysierenden Signals abhängt. Bei konkreten Anwendungen in der Telephonie werden beispielsweise Zeiträume von 50ms bis 300ms angewendet.

In diesem Idealfall konvergiert die Dämpfung R gegen unendlich.

Daher wird erfindungsgemäß als Maß für Übereinstimmung der akkumulierte Wert der mit der Leistung des tiefpassgefilterten ankommenden Signals iny gewichteten Dämpfung verwendet.

Dieser Wert C(T) stellt einen Korrespondenzkoeffizienten zum Zeitpunkt T dar und errechnet sich gemäß:

$$C(T) = \frac{\sum_{t=1}^{T} P^{\alpha}(\mathbf{Y})_t \, R_t}{\sum_{t=1}^{T} P^{\alpha}(\mathbf{Y})_t}$$

Formel 2

Der Index t stellt den Zeitpunkt der Iteration, gemessen in Abtastintervallen, beginnend mit dem Start der Analyse, dar.

Der in Formel 2 dargestellte Exponent Alpha variiert je nach zu analysierendem Signal zwischen den Werten 1 und 3.

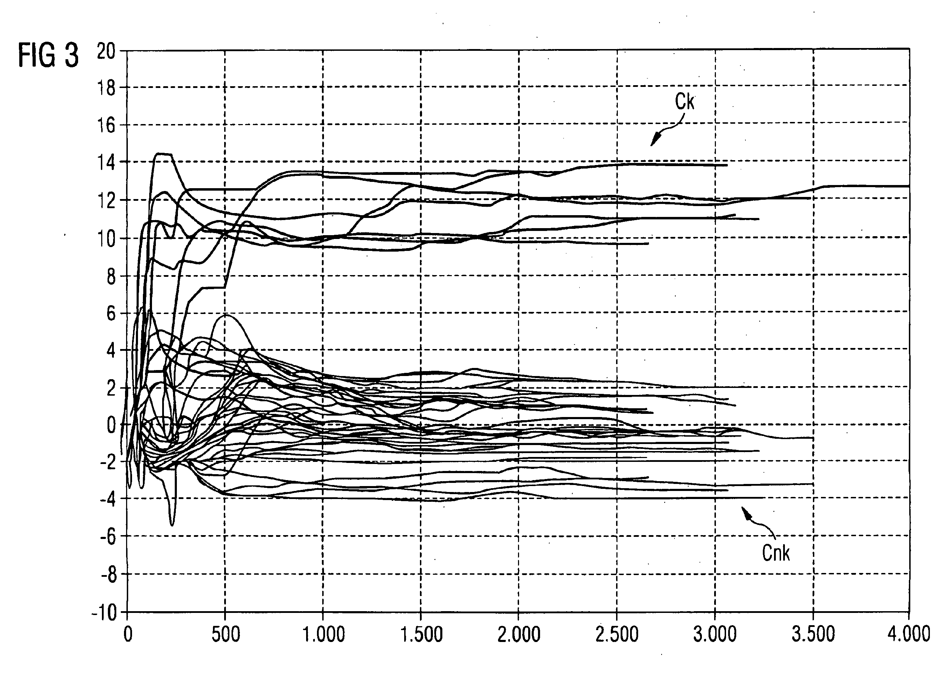

**Fig. 3** stellt den Verlauf eines Korrespondenzkoeffizienten C(T) in einer praktischen Umsetzung des erfindungsgemäßen Verfahrens dar. Die waagrechte Achse stellt die Zeitachse dar, wobei in diesem Fall die Einheit der Achsenbeschriftung Millisekunden sind. Die senkrechte Achse stellt den gemessenen Verlauf des Korrespondenzkoeffizienten C(T) in Dezibel dar. Die Kurvenschar Ck stellt Messwerte des Korrespondenzkoeffizienten C(T) im Fall, dass die zur Analyse anstehenden Kanäle Signale aus der gleichen Quelle transportieren, also korrespondierend sind, dar. Die Kurvenschar Cnk stellt Messwerte des Korrespondenzkoeffizienten C(T) im Fall, dass die zur Analyse anstehenden Kanäle Signale aus verschiedenen Quellen transportieren, dar.

Der Ablauf des beschriebenen Verfahrens ist wie folgt:

a) Auswahl eines zu analysierenden Paares aus jeweils einem ausgehenden Signal out1...outx...outM und einem ankommenden Signal in1...iny...inN und Zuführen dieser Signale an den Systemidentifikator A. Dabei ist es vorteilhaft, bereits analysierte Signalpaarungen auszunehmen. In Telekommunikationsanwendungen entsprechen die Signale out1...outx...outM und in1...iny...inN den in Sprachkanälen übertragenen Sprachsignalen, dabei ist es besonders vorteilhaft, Signale, welche auf soeben aufgebauten Sprachkanälen transportiert werden, zu untersuchen, da dabei eine deutlich höhere Wahrscheinlichkeit besteht, Signale gleichen Ursprungs zu finden und die zur Umsetzung des Verfahrens verfügbare Rechenleistung somit effizienter eingesetzt wird.

b) Ausführen der Systemanalyse entsprechend dem erfindungsgemäßen Verfahren und berechnen des Korrespondenzkoeffizienten C(T) gemäß Formel 2.

c) Analyse des Korrespondenzkoeffizienten C(T) und Treffen einer Entscheidung, ob die jeweils betrachteten Signale gleichen Ursprungs sind. Durch das beschriebene Verfahren ist gewährleistet, dass der Korrespondenzkoeffizient C(T) eine eindeutige Entscheidung ermöglicht. Die konkreten zeitlichen Schwellwerte, ab welchen eine Aussage über die Korrespondenz zweier untersuchter Signale getroffen werden kann, sind von den zu untersuchenden Signalen, besonders von der Zeitverzögerung, mit welcher ein ankommendes Signal in1...iny...inN eintrifft, abhängig. In Fig. 3 ist ein Beispiel der Analyse von Sprachsignalen, welche den in Telekommunikationsnetzen üblichen Verzerrungen und Laufzeiten unterworfen sind, dargestellt. In diesem Fall zeigt sich, dass das erfindungsgemäße Verfahren eine sichere Entscheidung über die Korrespondenz zweier Signale bereits ab einer Analysezeit von ca. 1,5 Sekunden ermöglicht.

**Liste der Bezeichnungen**

| | |
|---|---|
| E | Identifikationseinrichtung |
| A | Systemidentifikator |
| B | Bewertungseinheit |
| out(m) | Ausgehende Signale 1 bis M |
| in(n) | Ankommende Signale 1 bis N |
| TP1 | Tiefpass 1 |
| TP2 | Tiefpass 2 |
| W | Digitales Filter |
| S | Summierpunkt |
| X | Tiefpassgefiltertes ausgehendes Signal |
| Y | Tiefpassgefiltertes ankommendes Signal |
| WX | Filterausgangssignal W |
| D | Differenzsignal |
| R | Dämpfung |
| Ck | Messwertverlauf eines Korrespondenzkoeffizienten C(T) für korrespondierende Kanäle |
| Cnk | Messwertverlauf eines Korrespondenzkoeffizienten C(T) für nicht korrespondierende Kanäle |

**Patentansprüche**

1. Verfahren zur Identifikation von Signalen gleichen Ursprungs, basierend auf der Methode der Systemanalyse, bei dem

- ein erstes Signal (X) an den Eingang eines digitalen Filters (W) herangeführt wird,
- aus dem Filterausgangssignal (WX) dieses digitalen Filters (W) und dem zweiten Signal (Y) ein Differenzsignal (D) gebildet wird,
- dieses Differenzsignal (D) dazu verwendet wird, die Übertragungsfunktion des digitalen Filters (W) so anzupassen, dass das Differenzsignal (D) ein Minimum annimmt,
- ein Dämpfungswert (R) aus den Leistungswerten des Differenzsignals (D) und des zweiten Signals (Y) gemäß

$$R = 10 \, log_{10} \frac{P(\mathbf{Y})}{P(\mathbf{D})}$$

berechnet wird, wobei P(Y) und P(D) die jeweiligen Summen der Amplitudenquadrate über einen bestimmten Zeitraum darstellen,
- aus diesem Dämpfungswert (R) und dem Leistungswert des zweiten Signals (Y) gemäß

$$C(T) = \frac{\sum\limits_{t=1}^{T} P^{\alpha}(\mathbf{Y})_t \, R_t}{\sum\limits_{t=1}^{T} P^{\alpha}(\mathbf{Y})_t}$$

ein Korrespondenzkoeffizient ( C(T) ) berechnet und als Maß für die Feststellung eines gemeinsamen Ursprungs der beiden Signale (X, Y) verwendet wird, wobei t der Zeitpunkt der Iteration gemessen in Abtastintervallen beginnend vom Start der Analyse darstellen und wobei alpha einen im Wertebereich von 1 bis 3 frei zu wählenden Wert darstellt.

2. Verfahren gemäß Anspruch 1, wobei die beiden Signale (X, Y) mittels Tiefpassfilterung aus Eingangssignalen gewonnen werden.

3. Verfahren gemäß Anspruch 1 oder 2, wobei die beiden Signale (X, Y) mittels Reduzierung der Samplingrate aus Eingangssignalen gewonnen werden.

4. Einrichtung zur Ausführung eines Verfahrens gemäß der Ansprüche 1 bis 3, wobei

- Mittel zur Auswahl eines Eingangssignales (X) und eines weiteren Eingangssignales (Y),
- Mittel zur digitalen Filterung des Eingangssignales (X),
- Mittel zur Subtraktion des Filterausgangssignals (WX) des digitalen Filters (W) von dem zweiten Eingangssignal (Y), sowie
- Mittel zur Berechnung des Dämpfungswerts (R) und des Korrespondenzkoeffizienten ( C(T) )

vorgesehen sind.

5. Einsatz eines Verfahrens nach einem der Ansprüche 1 bis 3 zur Identifikation von Signalen gleichen Ursprungs, **dadurch gekennzeichnet, dass** als Eingangssignale des Verfahrens die über die Schnittstelle zwischen einer Basisstation und einer Steuerungseinheit eines Mobilfunknetzes geleiteten Sprachkanäle verwendet werden.

6. Einsatz eines Verfahrens nach einem der Ansprüche 1 bis 3 zur Identifikation von Signalen gleichen Ursprungs, **dadurch gekennzeichnet, dass** als Eingangssignale des Verfahrens die über die Schnittstelle zwischen einer Basisstation und einer Steuerungseinheit eines Mobilfunknetzes geleiteten Videokanäle verwendet werden.

**7.** Einsatz eines Verfahrens nach einem der Ansprüche 1 bis 3 zur Identifikation von Signalen gleichen Ursprungs, **dadurch gekennzeichnet, dass** das Verfahren in einem Telekommunikationsnetz angewandt wird, wobei die in diesem Telekommunikationsnetz auftretenden Signalisierungsinformationen genutzt werden, um unmittelbar nach dem Aufbau von Sprachkanälen den Vorgang des Identifizierens von Signalen gleichen Ursprungs auf diesen, soeben aufgebauten, Sprachkanälen vorzunehmen.

**Claims**

**1.** Method for identifying signals of the same origin, based on the method of system analysis, wherein

- a first signal (X) is advanced to the input of a digital filter (W),
- a differential signal (D) is formed from the filter output signal (WX) of this digital filter (W) and the second signal (Y),
- this differential signal (D) is used to adapt the transmission function of the digital filter (W) in such a way that the differential signal (D) assumes a minimum,
- an attenuation value (R) is calculated from the power values of the differential signal (D) and the second signal (Y) according to

$$R = 10\,log_{10}\frac{P(\mathbf{Y})}{P(\mathbf{D})}$$

where P(Y) and P(D) represent the respective sums of the amplitude quadrature over a certain period,
- a correspondence coefficient ( C(T) ) is calculated from this attenuation value (R) and the power value of the second signal (Y) according to

$$C(T) = \frac{\sum_{t=1}^{T} P^{\alpha}(\mathbf{Y})_t\, R_t}{\sum_{t=1}^{T} P^{\alpha}(\mathbf{Y})_t}$$

and is used as a measure for determining a common origin of the two signals (X, Y), where t represents the time of iteration measured in sampling intervals beginning from the start of analysis and where alpha represents a value that can be freely selected in a value range from 1 to 3.

**2.** Method according to claim 1, wherein the two signals (X, Y) are obtained from the input signals by low-pass filtering.

**3.** Method according to claim 1 or 2, wherein the two signals (X, Y) are obtained from input signals by reducing the sampling rate.

**4.** Device for carrying out a method according to claims 1 to 3, wherein

- means are provided for selecting an input signal (X) and a further input signal (Y),
- means are provided for digitally filtering the input signal (X),
- means are provided for subtracting the filter output signal (WX) of the digital filter (W) from the second input signal (Y), and
- means are provided for calculating the attenuation value (R) and the correspondence coefficient ( C(T) ).

**5.** Use of a method according to any one of claims 1 to 3 for identifying signals of the same origin, **characterised in that** the speech channels conveyed via the interface between a base station and a control unit of a mobile phone network are used as the input signals of the method.

6. Use of a method according to any one of claims 1 to 3 for identifying signals of the same origin, **characterised in that** the video channels conveyed via the interface between a base station and a control unit of a mobile phone network are used as the input signals of the method.

7. Use of a method according to any one of claims 1 to 3 for identifying signals of the same origin, **characterised in that** the method is applied in a telecommunications network, the signalling information occurring in this telecommunications network being used, immediately after the speech channels have been established, to carry out the process of identifying signals of the same origin on these speech channels that have just been established.

**Revendications**

1. Procédé d'identification de signaux de même origine, basé sur la méthode de l'analyse de système, dans lequel :

- un premier signal (X) est envoyé sur l'entrée d'un filtre numérique (W) ;
- un signal de différence (D) est formé à partir du signal de sortie de filtre (WX) de ce filtre numérique (W) et du deuxième signal (Y) ;
- ce signal de différence (D) est utilisé pour adapter la fonction de transmission du filtre numérique (W) de manière telle que le signal de différence (D) prenne un minimum ;
- une valeur d'amortissement (R) est calculée à partir des valeurs de puissance du signal de différence (D) et du deuxième signal (Y) conformément à

$$R = 10 \, log_{10} \frac{P(\mathbf{Y})}{P(\mathbf{D})}$$

P(Y) et P(D) étant les sommes respectives des carrés des amplitudes sur une période déterminée ;
- un coefficient de correspondance ( C(T) ) étant calculé à partir de cette valeur d'amortissement (R) et de la valeur de puissance du deuxième signal (Y) conformément à

$$C(T) = \frac{\sum_{t=1}^{T} P^{\alpha}(\mathbf{Y})_t R_t}{\sum_{t=1}^{T} P^{\alpha}(\mathbf{Y})_t}$$

et étant utilisé comme mesure de la constatation d'une origine commune des deux signaux (X, Y), t étant l'instant de l'itération mesuré en intervalles d'échantillonnage en commençant au début de l'analyse et alpha étant une valeur à choisir librement dans la plage de valeurs de 1 à 3.

2. Procédé selon la revendication 1, les deux signaux (X, Y) étant obtenus au moyen d'un filtrage passe-bas à partir de signaux d'entrée.

3. Procédé selon la revendication 1 ou 2, les deux signaux (X, Y) étant obtenus par réduction du taux d'échantillonnage à partir de signaux d'entrée.

4. Dispositif pour exécuter un procédé selon les revendications 1 à 3,

- des moyens pour sélectionner un signal d'entrée (X) et un autre signal d'entrée (Y),
- des moyens de filtrage numérique du signal d'entrée (X),

- des moyens pour soustraire du deuxième signal d'entrée (Y) le signal de sortie de filtre (WX) du filtre numérique (W) et
- des moyens pour calculer la valeur d'amortissement (R) et le coefficient de correspondance ( C(T) )

sont prévus.

5. Mise en oeuvre d'un procédé selon l'une des revendications 1 à 3 pour identifier des signaux de même origine, **caractérisé en ce que** sont utilisés, en tant que signaux d'entrée du procédé, les canaux vocaux dirigés via l'interface entre une station de base et une unité de commande d'un réseau radio mobile.

6. Mise en oeuvre d'un procédé selon l'une des revendications 1 à 3 pour identifier des signaux de même origine, **caractérisé en ce que** sont utilisés, en tant que signaux d'entrée du procédé, les canaux vidéo dirigés via l'interface entre une station de base et une unité de commande d'un réseau radio mobile.

7. Mise en oeuvre d'un procédé selon l'une des revendications 1 à 3 pour identifier des signaux de même origine, **caractérisé en ce que** le procédé est appliqué dans un réseau de télécommunication, les informations de signalisation qui se présentent dans ce réseau de télécommunication étant utilisées pour effectuer, directement après l'établissement de canaux vocaux, l'opération d'identification de signaux de même origine sur ces canaux vocaux qui viennent d'être établis.

FIG 1

out1
outx
outM

C(T)

A    B

in1
iny
inN

E

FIG 2

outx → TP1 → X

W

WX

D — S ← Y ← TP2 ← iny

FIG 3

EP 1 950 739 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 102006060002
- WO 0165543 A

### In der Beschreibung aufgeführte Nicht-Patentliteratur

- **OLDENBOURG ; MÜNCHEN ; WIEN.** *Digitale Verarbeitung analoger Signale,* 1984
- **WIDROW, B. ; STEARNS, S.D.** Adaptive Signal Processing. Prentice-Hall, 1985
- Adaptive Signal Processing. **Widrow, B. ; Stearns, S.D.** Adaptive Signal Processing. Prentice-Hall, 1985